# EUROPÄISCHE PATENTSCHRIFT

(11) **EP 1 410 151 B1**
(45) Veröffentlichungstag und Bekanntmachung des Hinweises auf die Patenterteilung: **18.05.2005**
(21) Anmeldenummer: 02760215.0
(22) Anmeldetag: 02.07.2002
(51) Int. Cl.: G06F 1/00, G07F 7/10, G06F 9/318, G06F 11/16

(54) **PROZESSOR MIT MEHREREN RECHENWERKEN**
PROCESSOR COMPRISING A NUMBER OF ARITHMETIC-LOGIC UNITS
PROCESSEUR PLUSIEURS UNITES DE CALCUL

(30) Priorität: 26.07.2001 DE 10136335
(43) Veröffentlichungstag der Anmeldung: 21.04.2004
(73) Patentinhaber: Infineon Technologies AG, 81669 München (DE)
(72) Erfinder: JANKE, Marcus, 81539 München (DE); LAACKMANN, Peter, 81541 München (DE)
(74) Vertreter: Schenk, Markus
(86) Internationale Anmeldenummer: PCT/EP2002/007298
(87) Internationale Veröffentlichungsnummer: WO 2003/010638

(56) Entgegenhaltungen:
- EP-A- 1 115 094
- FR-A- 2 787 900

## Beschreibung

Die vorliegende Erfindung bezieht sich auf einen Prozessor mit mehreren Rechenwerken und insbesondere auf einen Prozessor mit mehreren Rechenwerken, die in einer wählbaren Betriebsart entsprechend der Dual-Rail-Logik zusammenwirken können.

Mikroprozessoren bzw. Controller für Chipkartenanwendungen und andere kryptographische Anwendungen müssen häufig besonderen Sicherheitsbedingungen genügen. Eine der Hauptanforderungen ist die Sicherheit des Mikroprozessors gegen ein unberechtigtes Auslesen geheimer Informationen, insbesondere über Seitenkanalangriffe ("side channel attacks"). Seitenkanalangriffe erfolgen beispielsweise durch eine Erfassung der Leistungsaufnahme eines Prozessors oder über eine elektromagnetische oder elektrostatische Erfassung von Signalflüssen, wobei aus den so gewonnenen Informationen Rückschlüsse auf interne Vorgänge in dem Prozessor gezogen werden können. Neben Hochsicherheitsaufgaben muß ein Chipkartencontroller aber auch eine Vielzahl konventioneller Operationen ausführen, bei denen eine hohe Leistung einen großen Vorteil darstellt und einen wichtigen Marktvorteil ergeben kann. Als Beispiele wären hier Anwendungen aus dem Mobilfunkbereich zu nennen, bei denen die eigentliche Authentikation nur einen sehr geringen Teil der Programmlaufzeit ausmacht. Trotzdem wird für diesen geringen Anteil die volle Sicherheit der Authentikation verlangt. Ähnliches gilt auch für elektronische Geldbörsen, sogar für die Geldkarte, denn auch bei diesen Anwendungen sind große Teile des Programmablaufs wenig sicherheitskritisch, die eigentliche Authentikation ist jedoch eine Hochsicherheitsaufgabe.

Eine hochsichere Ausführung des Prozessorkerns ist z. B. in der sog. Dual-Rail-Logik mit Precharge möglich. Die Ausführung eines Sicherheitsmikrocontrollers in Dual-Rail-Logik mit Precharge ist eine wichtige Maßnahme gegen Seitenkanalangriffe, die heute eine große Bedrohung darstellen. Sie verursacht jedoch einen im Vergleich zu einem herkömmlichen Prozessor wirtschaftlich nachteiligen größeren Flächenbedarf und kann durch die Notwendigkeit mehrerer Taktphasen zu Leistungseinbußen des Mikroprozessors führen. Dies hat im Vergleich zu Standardarchitekturen eine geringere Rechenleistung bzw. einen geringen Datendurchsatz sowie einen erhöhten Leistungsbedarf des Prozessors zur Folge.

Dokument EP-A-1 115 094 beschreibt ein Verfahren und ein System, daß gegen "Differential Power Analysis", Attacken eingesetzt werden Kann. Beim in D1 beschrieben Verfahren wird sichergestellt, daß bei Durchführung, einer Kryptographischen Operation in der integrierten Schaltung jeweils wenigstens zwei Prozessoren gleichzeitig und parallel eine Kryotographische Operation ausführen.

Die Aufgabe der vorliegenden Erfindung besteht darin, einen Prozessor mit erhöhter Sicherheit zu schaffen, der eine höhere Rechenleistung bzw. einen kleineren Leistungsbedarf aufweist.

Diese Aufgabe wird durch einen Prozessor gemäß Anspruch 1, 2, oder 3 gelöst.

Ein Prozessor gemäß der vorliegenden Erfindung umfaßt ein erstes Rechenwerk, ein zweites Rechenwerk und eine Steuereinrichtung zum Ansteuern der beiden Rechenwerke derart, daß diese wahlweise in einer komplementäre Daten verarbeitenden Hochsicherheitsbetriebsart oder in einer unabhängige Daten verarbeitenden Parallelbetriebsart arbeiten. Anstatt der Parallelbetriebsart oder zusätzlich kann als weitere Betriebsart eine Leistungssparbetriebsart, in der eines der Rechenwerke abgeschaltet ist, oder eine Sicherheitsbetriebsart, in der beide Rechenwerke parallel gleiche Daten verarbeiten, vorgesehen sein.

Gemäß einem bevorzugten Ausführungsbeispiel der vorliegenden Erfindung umfaßt ein Prozessor ferner eine schaltbare Komplementierungseinrichtung mit einem Ausgang, der mit einem Eingang des zweiten Rechenwerks verbunden ist, zum Empfangen von Daten und zum wahlweisen Ausgeben der empfangenen Daten oder des Komplements der empfangenen Daten.

Ein Prozessor gemäß der vorliegenden Erfindung kann ferner ein drittes Rechenwerk und ein viertes Rechenwerk umfassen, wobei das dritte Rechenwerk und das vierte Rechenwerk durch die Steuereinrichtung derart ansteuerbar sind, daß sie wahlweise in einer komplementäre Daten verarbeitenden Hochsicherheitsbetriebsart oder in einer unabhängige Daten verarbeitenden Parallelbetriebsart arbeiten. In einer anstelle der Hochsicherheitsbetriebsart oder zusätzlich zu ihr vorgesehenen Leistungssparbetriebsart ist das dritte und/oder das vierte Rechenwerk abgeschaltet.

Das erste Rechenwerk und das zweite Rechenwerk sind vorzugsweise derart ausgestaltet, daß sie in der Hochsicherheitsbetriebsart zeitsynchron die gleichen Befehle verarbeiten können. Das erste Rechenwerk und das zweite Rechenwerk sind vorzugsweise räumlich benachbart angeordnet. Der Prozessor kann beispielsweise ein Kryptographieprozessor sein.

Ein weiterer Prozessor gemäß der vorliegenden Erfindung umfaßt ein erstes Rechenwerk, ein zweites Rechenwerk, eine Datenquelle, welche mit dem ersten Rechenwerk und dem zweiten Rechenwerk derart verbunden ist, daß synchron dem ersten Rechenwerk Daten und dem zweiten Rechenwerk das Komplement der Daten zugeführt werden, und eine Befehlsquelle, welche ein Paar von Befehlen aufweist, wobei einer der Befehle des Befehlspaares für das erste Rechenwerk vorgesehen ist und wobei der andere Befehl des Befehlspaares für das zweite Rechenwerk vorgesehen ist, und wobei die Befehlsquelle mit dem ersten Rechenwerk und dem zweiten Rechenwerk derart verbunden ist, daß synchron der für das erste Rechenwerk vorgesehene Befehl des Befehlspaares dem ersten Rechenwerk und der für das zweite Rechenwerk vorgesehene Befehl des Befehlspaares dem zweiten Rechenwerk zugeführt werden können.

Der für das erste Rechenwerk vorgesehene Befehl und der für das zweite Rechenwerk vorgesehene Befehl können gleich sein, wenn der Prozessor in einer Dual-Rail-Betriebsart oder einer Sicherheitsbetriebsart arbeiten soll, sie können voneinander verschieden sein, wenn der Prozessor in einer Hochleistungsbetriebsart arbeiten soll, und einer der beiden Befehle kann das Rechenwerk, für das er vorgesehen ist, stillegen, wenn der Prozessor in einer Leistungssparbetriebsart arbeiten soll.

Eine weitere Aufgabe der vorliegenden Erfindung besteht darin, eine Chipkarte mit erhöhter Sicherheit und einer verbesserten Rechenleistung und/oder einem verringerten Leistungsbedarf zu schaffen.

Diese Aufgabe wird durch eine Chipkarte gemäß Anspruch 10 gelöst.

Eine Chipkarte gemäß der vorliegenden Erfindung umfaßt einen der oben beschriebenen Prozessoren.

Der vorliegenden Erfindung liegt die Erkenntnis zugrunde, daß eine Dual-Rail-Logik durch eine Anordnung mehrerer Prozessorteilmodule realisiert werden kann, die in verschiedenen Betriebsarten betrieben werden können. Vorteilhaft enthält ein solcher Mikroprozessor zwei oder eine andere gerade Anzahl von CPU-Teilmodulen, die zumindest paarweise identisch aufgebaut sind. Bei zwei CPU-Teilen kann zwischen vier verschiedenen Betriebszuständen gewählt und im Betrieb umgeschaltet werden:
1. Hochsicherheitsbetriebsart: Einer der beiden CPU-Teile bzw. eines der beiden Rechenwerke arbeitet wie ein herkömmlicher Standardprozessor. Der zweite Teil jedoch wird mit den komplementären Daten versorgt und bearbeitet diese zeitsynchron mit exakt den gleichen Befehlen und der gleichen Ansteuerung, wobei die Rechenwerke im Precharge-Betrieb arbeiten. Damit wirken die beiden Prozessorteile zusammen wie ein einziger Prozessor mit Dual-Rail-Logik, sie befinden sich in der Hochsicherheitsbetriebsart. Vorteilhaft sind die komplementär rechnenden Elemente räumlich nebeneinander angeordnet und vorzugsweise sind sie ferner verwoben angeordnet, wodurch eine solche Anordnung auch gegen elektromagnetische Abstrahlungsanalysen gesichert werden kann. Im Sinne dieser Anmeldung ist ein Prozessor mit komplementär rechnende Rechenwerke ein Prozessor mit einer von verarbeiteten Daten unabhängigen Stromaufnahme.
2. Hochleistungsbetriebsart: Für Programme oder Programmteile, bei denen eine starke Sicherung gegen Seitenkanalangriffe nicht erforderlich ist, ist die Hochleistungsbetriebsart vorgesehen. In dieser Betriebsart werden die CPU-Teile bzw. Rechenwerke mit parallel abzuarbeitenden bzw. unterschiedlichen Programmteilen versorgt. So entsteht eine Anordnung von zwei CPUs bzw. Prozessoren, wodurch sich der Datendurchsatz verdoppeln kann.
3. Leistungssparbetriebsart: In der Leistungssparbetriebsart wird eines oder mehrere Rechenwerke deaktiviert, so daß nur noch ein Rechenwerk oder ein Teil der Rechenwerke arbeitet. Durch die kleinere Anzahl von schaltenden Gattern ist die Leistungsaufnahme reduziert. Der Prozessor arbeitet in dieser Betriebsart weder im Bereich der höchsten Sicherheitsstufe noch im Bereich der höchsten Leistung.
4. Sicherheitsbetriebsart: Eine Sicherheitsbetriebsart ist eine Betriebsart, bei der zwei Rechenwerke die gleichen Daten verarbeiten und durch Vergleich der Ergebnisse dieser Verarbeitung die Betriebssicherheit erhöht wird, was beispielsweise einen Schutz gegen DFA (differential fault attack) bietet.

Ein Vorteil des erfindungsgemäßen Prozessors besteht darin, daß er die hohe Sicherheit einer Dual-Rail-Logik für sicherheitsrelevante Programme bzw. Programmteile und eine hohe Rechenleistung oder einen geringeren Leistungsbedarf für eine Verarbeitung weniger sicherheitsrelevanter Programmteile bietet, wobei zwischen verschiedenen Betriebsarten dynamisch auch während des Betriebes geschalten werden kann.

Wenn in der vorliegenden Anmeldung von zwei Rechenwerken die Rede ist, können jeweils *n*·2 Rechenwerke zum Einsatz kommen, wobei *n* eine natürliche Zahl ist.

Ein bevorzugtes Ausführungsbeispiel der vorliegenden Erfindung wird nachfolgend Bezug nehmend auf die beiliegenden Zeichnungen näher erläutert. Es zeigen:
- Fig. 1: eine schematische Darstellung eines Ausführungsbeispiels der vorliegenden Erfindung;
- Fig. 2: eine schematische Darstellung einer Hochsicherheitsbetriebsart des Ausführungsbeispiels aus Fig. 1;
- Fig. 3: eine schematische Darstellung einer Hochleistungsbetriebsart des Ausführungsbeispiels aus Fig. 1;
- Fig. 4: eine schematische Darstellung einer Leistungssparbetriebsart des Ausführungsbeispiels aus Fig. 1; und
- Fig. 5: eine schematische Darstellung einer Sicherheitsbetriebsart des Ausführungsbeispiels aus Fig. 1.

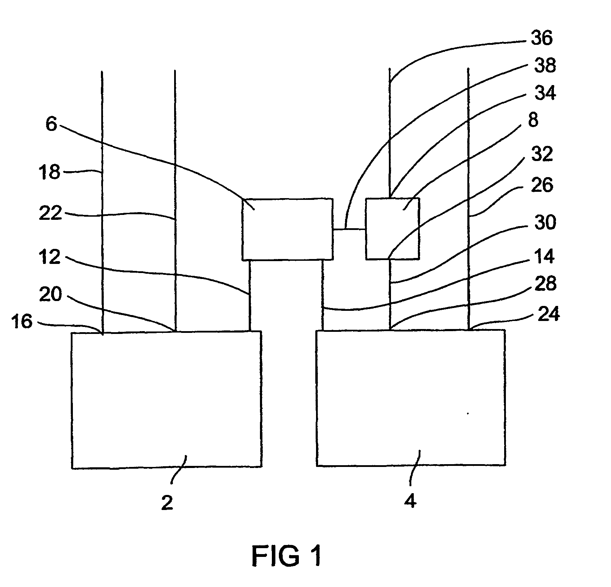

Fig. 1 ist eine schematische Darstellung des für die vorliegende Erfindung relevanten Teils eines Prozessors gemäß einem Ausführungsbeispiel der vorliegenden Erfindung. Der Prozessor weist ein erstes Rechenwerk 2, ein zweites Rechenwerk 4, eine Steuereinrichtung 6 und eine Komplementierungseinrichtung 8 auf. Im Fall von zwei parallelen Datenleitungen kann die Komplementierungseinrichtung 8 durch einen Inverter gebildet sein. Die Steuereinrichtung 6 ist mit dem ersten Rechenwerk 2 über eine Steuerleitung 12 und mit dem zweiten Rechenwerk 4 über eine Steuerleitung 14 wirksam verbunden. Das erste Rechenwerk 2 weist einen Befehlseingang 16, der über eine Leitung 18 mit einer nicht dargestellten Befehlsquelle, beispielsweise einem Programmspeicher in Form eines ROMs (ROM = Read Only Memory = Nur-Lese-Speicher), eines RAMs (RAM = Random Access Memory = Speicher mit wahlfreiem Zugriff) oder einer Festplatte, verbunden ist, sowie einen Dateneingang 20, der über eine Datenleitung 22 mit einer nicht dargestellten Datenquelle, beispielsweise einem Datenspeicher oder einer Schnittstelle verbunden ist, auf. Das zweite Rechenwerk 4 weist einen Befehlseingang 24, der über eine Befehlsleitung 26 mit der nicht dargestellten Befehlsquelle, mit der das erste Rechenwerk über die Befehlsleitung 18 verbunden ist, oder mit einer anderen Befehlsquelle verbunden ist, und einen Dateneingang 28, der über eine Datenleitung 30 mit einem Ausgang 32 der Komplementierungseinrichtung 8 verbunden ist, auf. Die Komplementierungseinrichtung 8 weist ferner einen Eingang 34 auf, der über eine Datenleitung 36 mit der Datenquelle, mit der das erste Rechenwerk 2 über die Datenleitung 22 verbunden ist, oder einer anderen Datenquelle verbunden ist. Die Steuereinrichtung 6 und die Komplementierungseinrichtung 8 sind über eine Steuerleitung 38 wirksam verbunden.

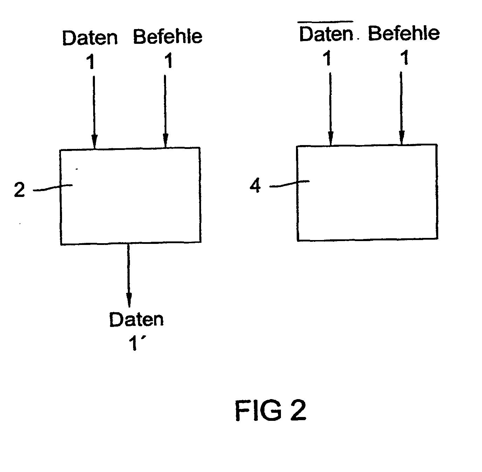

Das erste Rechenwerk 2 bzw. das zweite Rechenwerk 4 verarbeitet gesteuert durch Befehle, die ihm an dem Befehlseingang 16 bzw. 24 zugeleitet werden, Daten, die ihm am Dateneingang 20 bzw. 28 zugeleitet werden. Die Komplementierungseinrichtung 8 ist steuerbar bzw. schaltbar, d. h. sie gibt an ihrem Ausgang 32 wahlweise Daten aus, die sie am Eingang 34 empfangen hat (Komplementierungseinrichtung ausgeschaltet) oder deren Komplement (Komplementierungseinrichtung eingeschaltet). Diese beiden Zustände der Komplementierungseinrichtung 8 werden durch die Steuereinrichtung 6 über die Steuerleitung 38 gesteuert bzw. geschaltet. Die Steuereinrichtung 6 steuert ferner das erste Rechenwerk 2 und das zweite Rechenwerk 4 um mehrere verschiedene Betriebsmodi bzw. Betriebsarten einzustellen, die nachfolgend anhand der Fig. 2 bis 4 näher beschrieben werden.

Fig. 2 ist eine schematische Darstellung einer Hochsicherheitsbetriebsart des Ausführungsbeispiels aus Fig. 1. In dieser Betriebsart empfangen das erste Rechenwerk 2 und das zweite Rechenwerk 4 an dem Befehlseingang 16 bzw. 24 dieselben Befehle zur Verarbeitung von Daten. Ferner werden dem ersten Rechenwerk 1 am Dateneingang 20 und der Komplementierungseinrichtung 8 am Eingang 34 dieselben Daten zugeleitet. Die Komplementierungseinrichtung 8 ist eingeschaltet, d. h. sie gibt am Ausgang 32 das Komplement der Daten aus, die sie am Eingang 34 empfängt. Das zweite Rechenwerk 4 empfängt somit an seinem Dateneingang 28 das Komplement der Daten, die das erste Rechenwerk 2 an seinem Dateneingang 20 empfängt. In dieser Hochsicherheitsbetriebsart entspricht die Funktion des Prozessors gemäß dem vorliegenden Ausführungsbeispiel somit der Dual-Rail-Logik, d. h. die vorzugsweise baugleichen Rechenwerke 2 und 4 verarbeiten gesteuert durch dieselben Befehle synchron komplementäre Daten. In dieser Hochsicherheitsbetriebsart ist ein Seitenkanalangriff über eine Messung der Leistungsaufnahme des Prozessors stark erschwert oder gar unmöglich, da die Leistungsaufnahme des ersten Rechenwerks und des zweiten Rechenwerks zusammen aufgrund der Verarbeitung komplementärer Daten nicht von den Daten abhängig ist. Wenn das erste Rechenwerk 2 und das zweite Rechenwerk 4 in räumlicher Nähe zueinander oder ineinander verwoben angeordnet werden, wird ferner ein Seitenkanalangriff über eine Analyse der elektromagnetischen Abstrahlung des Prozessors wesentlich erschwert, da aufgrund der Verarbeitung komplementärer Daten immer in unmittelbarer Nähe zueinander Ströme bzw. Spannungen auftreten, welche einem digitalen Wert und seinem Komplement entsprechen.

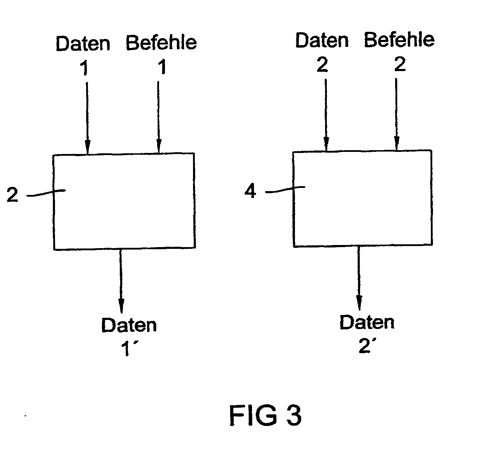

Fig. 3 zeigt eine Hochleistungsbetriebsart des ersten Rechenwerks 2 und des zweiten Rechenwerks 4. In dieser Betriebsart werden dem ersten Rechenwerk 2 und dem zweiten Rechenwerk 4 an ihren Dateneingängen 20 und 28 verschiedene Daten und an ihren Befehlseingängen 16 und 24 verschiedene Befehle zugeführt. Durch die parallele bzw. gleichzeitige Verarbeitung verschiedener oder gleicher Daten mit verschiedenen oder gleichen Befehlen bzw. Programmen oder Programmteilen verdoppelt sich die Rechenleistung des Prozessors gemäß dem vorliegenden Ausführungsbeispiel. Der Prozessor kann somit in der gleichen Zeit und mit der gleichen Leistungsaufnahme wie in der Hochsicherheitsbetriebsart, gesteuert durch die doppelte Anzahl von Befehlen, die doppelte Anzahl von Daten verarbeiten. Gleichzeitig bietet diese Betriebsart aber nicht den besonderen Schutz gegen Seitenkanalangriffe, den die anhand der Fig. 2 erläuterte Hochsicherheitsbetriebsart bietet. Sie bietet jedoch den Vorteil der Verschleierung der Stromprofile sowie der elektromagnetischen Abstrahlung durch parallele Verarbeitung verschiedener Daten.

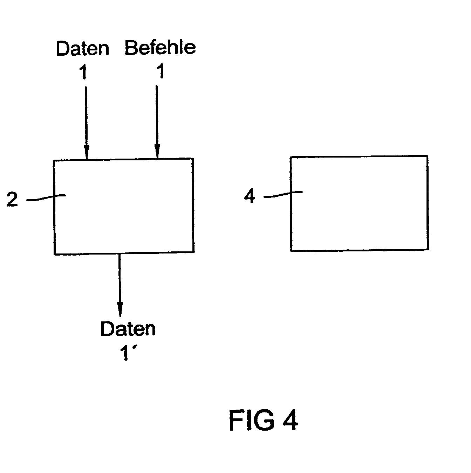

Fig. 4 ist eine schematische Darstellung einer Leistungssparbetriebsart. In dieser Betriebsart ist eines der beiden Rechenwerke, hier das zweite Rechenwerk 4, abgeschaltet bzw. es wird nicht mit Leistung versorgt. Das andere Rechenwerk, hier das erste Rechenwerk 2, empfängt Daten und Befehle, welche es verarbeitet. In dieser Betriebsart sind die Leistungsaufnahme und die Rechenleistung der beiden Rechenwerke gegenüber der anhand Fig. 3 erläuterten Hochleistungsbetriebsart halbiert. Wie die Hochleistungsbetriebsart bietet auch die Leistungssparbetriebsart nicht die besondere Sicherheit gegenüber Seitenkanalangriffen, welche die anhand der Fig. 2 erläuterte Hochsicherheitsbetriebsart bietet.

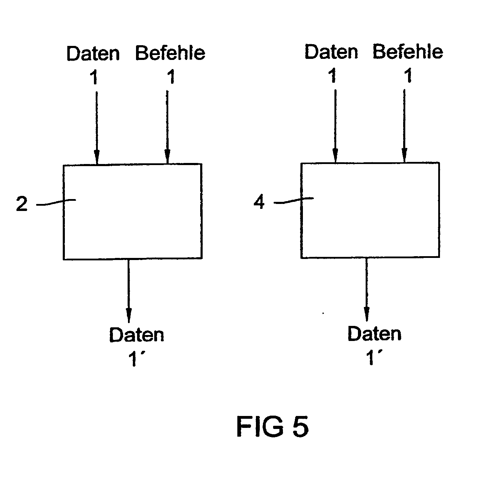

Fig. 5 ist eine schematische Darstellung einer Sicherheitsbetriebsart des Ausführungsbeispieles aus Fig. 1. In dieser Betriebsart empfangen das erste Rechenwerk 2 und das zweite Rechenwerk 4 an dem Befehlseingang 16 bzw. 24 dieselben Befehle zur Verarbeitung von Daten. Ferner werden dem ersten Rechenwerk 1 am Dateneingang 20 und der Komplementierungseinrichtung 8 am Eingang 34 dieselben Daten zugeleitet. Die Komplementierungseinrichtung 8 ist ausgeschaltet, d. h. sie gibt am Ausgang 32 die Daten aus, die sie am Eingang 34 empfängt. Das zweite Rechenwerk 4 empfängt somit an seinem Dateneingang 28 die gleichen Daten, die das erste Rechenwerk 2 an seinem Dateneingang 20 empfängt. In dieser Sicherheitsbetriebsart verarbeiten das erste Rechenwerk 2 und das zweite Rechenwerk 4 gesteuert durch dieselben Befehle synchron die gleichen Daten. Die durch beide Rechenwerke ausgegebenen Ergebnisse werden einer in Fig. 1 nicht dargestellten Vergleichseinrichtung zugeführt, welche die Ausgabe des ersten Rechenwerkes 2 und die Ausgabe des zweiten Rechenwerkes 4 auf Übereinstimmung überprüft und abhängig davon ein Signal ausgibt, welches verwendet werden kann, um beispielsweise eine Wiederholung der Verarbeitung der Eingangsdaten, eine Verwendung von Defaultdaten bzw. voreingestellten Daten anstelle der ausgegebenen Ergebnisse, eine Plausibilitätsüberprüfung der beiden ausgegebenen Ergebnisse, eine vorübergehende Unterbrechung oder einen vollständigen Abbruch der Datenverarbeitung durch die Rechenwerke oder eine andere voreingestellte Reaktion zu steuern bzw. auszulösen. Dadurch bietet die Sicherheitsbetriebsart einen Schutz gegen einen DFA.

Entsprechend kann auch bei der oben anhand der Fig. 2 dargestellten Hochsicherheitsbetriebsart eine Überprüfung der durch das erste Rechenwerk 2 und das zweite Rechenwerk 4 ausgegebenen Ergebnisse auf Komplementarität durchgeführt werden.

Die anhand der Fig. 2 bis 5 erläuterten Betriebsarten eignen sich für verschiedene Aufgaben, welche ein Prozessor, beispielsweise ein Prozessor in einer Chipkarte oder ein anderer Kryptoprozessor oft abwechselnd oder nacheinander erfüllen muß. Bei der Abarbeitung von Programmen oder Programmteilen zur Authentikation, zur Verschlüsselung oder zum Zugriffsschutz ist eine maximale Sicherheit gegenüber Angriffen Unbefugter, beispielsweise gegenüber Seitenkanalangriffen, erforderlich. Der Umfang dieser extrem sicherheitsrelevanten Aufgaben ist dabei oft vergleichsweise gering. Sie werden in der Hochsicherheitsbetriebsart ausgeführt, welche eine maximale Sicherheit und eine mittlere Leistung bietet.

Den größten Umfang haben bei vielen Anwendungen Operationen bzw. Aufgaben des Prozessors, die geringere oder gar keine Anforderungen an die Sicherheit gegenüber Angriffen stellen, deren Abarbeitung in möglichst kurzer Zeit jedoch erwünscht ist, beispielsweise um einem Anwender einen hohen Komfort zu bieten und ihm Wartezeiten zu ersparen. Diese Operationen können in der Hochleistungsbetriebsart ausgeführt werden, die einen geringeren Grad an Sicherheit gegenüber Angriffen, aber eine im Vergleich zur Hochsicherheitsbetriebsart verdoppelte Rechenleistung bietet.

Ferner treten bei zahlreichen Anwendungen Aufgaben auf, bei denen nur eine geringe oder fast verschwindende Rechenleistung erforderlich ist, weil beispielsweise im Programmablauf auf eine Eingabe eines Anwenders oder eine Information, die von einer anderen Einrichtung angefordert wurde, gewartet wird. Diese Aufgaben können in der Leistungssparbetriebsart ausgeführt werden, welche die geringe Rechenleistung der Hochsicherheitsbetriebsart mit der geringen Sicherheit der Hochleistungsbetriebsart kombiniert, dabei aber den Leistungsbedarf der Rechenwerke halbiert.

Ein Vorteil eines Prozessors gemäß der vorliegenden Erfindung besteht darin, daß durch eine Realisierung von zwei oder drei der oben beschriebenen Betriebsarten, insbesondere der Hochsicherheitsbetriebsart zusammen mit der Hochleistungsbetriebsart und/oder der Leistungssparbetriebsart, eine flexible Anpassung von Sicherheitsstandard, Rechenleistung und Leistungsbedarf möglich ist, wobei zwischen den Betriebsarten dynamisch bzw. während des Betriebs umgeschaltet bzw. gewechselt werden kann. So kann beispielsweise in der Hochleistungsbetriebsart ein Anwender aufgefordert werden, eine PIN einzugeben, in der Leistungssparbetriebsart auf eine Eingabe der PIN gewartet werden und diese anschließend in der Hochsicherheitsbetriebsart kryptographisch verarbeitet werden.

Zur Realisierung eines Prozessors, der gemäß der vorliegenden Erfindung zwei, drei oder vier der anhand der Fig. 2 bis 5 erläuterten Betriebsarten aufweist, ist die in Fig. 1 schematisch dargestellte Schaltung aus dem ersten Rechenwerk 2, dem zweiten Rechenwerk 4, der Steuereinrichtung 6 und der Komplementierungseinrichtung 8 nur ein Beispiel. Alternativ zu der Darstellung in Fig. 1 kann beispielsweise die Komplementierungseinrichtung 8 ein Bestandteil des zweiten Rechenwerks 4 und dessen Dateneingang 28 nachgeschaltet sein und/oder es kann eine weitere Komplementierungseinrichtung in der Datenleitung 22 des ersten Rechenwerks oder im ersten Rechenwerk 2 vorgesehen sein. Abhängig von der Architektur bzw. der verwendeten Schaltung der Rechenwerke 2 und 4 kann ferner unter Umständen auf eine Komplementierungseinrichtung verzichtet werden, weil beispielsweise zum Komplementieren lediglich zwei Leitungen gekreuzt werden müssen.

Die Steuereinrichtung 6 kann das erste Rechenwerk 2 und das zweite Rechenwerk 4 durch die Steuerleitungen 12 und 14 anschalten bzw. aktivieren und (in der Leistungssparbetriebsart) ausschalten bzw. stillegen, sie kann dies alternativ aber auch über einen Zugriff auf die Leistungsversorgung der beiden Rechenwerke tun.

Eine Zuführung derselben Daten über die Datenleitung 22 an den Dateneingang 20 des ersten Rechenwerks 2 und über die Datenleitung 36 an den Eingang 34 der Komplementierungseinrichtung 8 ist auf verschiedene Weisen möglich. Beispielsweise können durch eine in Fig. 1 nicht dargestellte "Datenweiche", die mit den Datenleitungen 22 und 36 verbunden ist, Daten von einer Datenquelle synchron zum Dateneingang 20 des ersten Rechenwerks 2 und zum Eingang 34 in der Komplementierungseinrichtung 8 geleitet werden.

Alternativ kann eine Datenweiche in die Steuereinrichtung 6 integriert sein. Dann ist abweichend von der Darstellung in Fig. 1 die Steuereinrichtung 6 mit einer Datenquelle verbunden, wobei der Dateneingang 20 des ersten Rechenwerks 2 über eine Datenleitung mit der Steuereinrichtung 6 verbunden ist, und wobei der Eingang 34 der Komplementierungseinrichtung 8 über eine Datenleitung mit der Steuereinrichtung 6 verbunden ist. Die Steuereinrichtung 6 kann dann je nach der erwünschten Betriebsart dieselben Daten synchron zu dem ersten Rechenwerk 2 und über die komplementierende oder nicht komplementierende Komplementierungseinrichtung 8 zu dem zweiten Rechenwerk 4 leiten oder verschiedene Daten an das erste Rechenwerk 2 und über die nicht-komplementierende Komplementierungseinrichtung 8 an das zweite Rechenwerk 4 leiten oder nur Daten an das erste Rechenwerk 2 leiten.

Auch beim Leiten von Befehlen über die Befehlsleitungen 18 und 26 an den Befehlseingang 16 des ersten Rechenwerks 2 bzw. den Befehlseingang 24 des zweiten Rechenwerks 4 existieren verschiedene Möglichkeiten. Der Befehlseingang 16 des ersten Rechenwerks 2 und der Befehlseingang 24 des zweiten Rechenwerks 4 können über die Befehlsleitungen 18 bzw. 26 direkt mit ein und derselben oder mit zwei verschiedenen Befehlsquellen verbunden sein, wie es oben in Zusammenhang mit Fig. 1 erläutert wurde. Alternativ kann eine Befehlsquelle mit der Steuereinrichtung 6 verbunden sein, welche über eine Befehlsleitung mit dem Befehlseingang 16 des ersten Rechenwerks und über eine Befehlsleitung mit dem Befehlseingang 24 des zweiten Rechenwerks verbunden ist. Die Steuereinrichtung 6 leitet dann je nach der erwünschten Betriebsart synchron dieselben Befehle oder verschiedene Befehle an den Befehlseingang 16 des ersten Rechenwerks 2 und den Befehlseingang 24 des zweiten Rechenwerks 4 oder aber nur an eines der beiden Rechenwerke 2 und 4.

Die Steuereinrichtung 6 zum Ansteuern der beiden Rechenwerke 2 und 4 kann also auf verschiedene Weise ausgeführt und mit dem ersten Rechenwerk 2, dem zweiten Rechenwerk 4 und der Komplementierungseinrichtung 8 wirksam verbunden sein, damit in Abhängigkeit von der erwünschten Betriebsart das erste Rechenwerk 2 und das zweite Rechenwerk 4 synchron dieselben oder verschiedene Daten und Befehle verarbeiten können oder damit eines der beiden Rechenwerke 2 und 4 stillgelegt werden kann.

Ferner ist eine Software-Realisierung der oben anhand der Fig. 2 bis 4 erläuterten Betriebsarten und des Wechsels zwischen denselben möglich. In diesem Fall weist der Prozessor ein erstes Rechenwerk 2 und ein zweites Rechenwerk 4 auf, und die Steuereinrichtung ist durch Befehle realisiert, welche durch den Prozessor bzw. die Rechenwerke ausführbar sind. Der Befehlseingang 16 des ersten Rechenwerks 2 und der Befehlseingang 24 des zweiten Rechenwerks 4 sind mit einer Befehlsquelle bzw. einem Programmspeicher, beispielsweise einem ROM (ROM = read only memory = Nur-Lese-Speicher), verbunden. Das erste Rechenwerk 2 und das zweite Rechenwerk 4 weisen jeweils einen oder mehrere Dateneingänge 20 bzw. 28 auf, wobei alle Datenquellen, welche Daten liefern, die in der Hochsicherheitsbetriebsart verarbeitet werden sollen, beispielsweise eine Anwenderschnittstelle, über die von einem Anwender eine PIN eingegeben wird, parallel so mit einem Dateneingang 20 des ersten Rechenwerks und einem Dateneingang 28 des zweiten Rechenwerks verbunden sind, daß dem ersten Rechenwerk 2 die Daten der Datenquelle und synchron dazu dem zweiten Rechenwerk 4 das Komplement der Daten der Datenquelle zugeleitet werden.

Dies kann, wie es bereits oben anhand des in Fig. 1 dargestellten Ausführungsbeispiels erläutert wurde, beispielsweise durch eine Komplementierungseinrichtung in der Datenleitung zwischen der Datenquelle und dem Dateneingang des zweiten Rechenwerks oder aber, je nach der verwendeten Architektur der Rechenwerke, auch durch einfaches Kreuzen von Datenleitungen erfolgen. Die Befehlsquelle enthält Paare von Befehlen, wobei jeweils einer der Befehle für das erste Rechenwerk vorgesehen ist und diesem über einem Befehlseingang 16 zugeführt wird, und wobei der jeweils andere Befehl des Paars für das zweite Rechenwerk 4 vorgesehen ist, und diesem synchron über den Befehlseingang 24 zugeführt wird.

Programmteile, die für die oben anhand der Fig. 2 erläuterten Hochsicherheitsbetriebsart vorgesehen sind, weisen Paare von Befehlen auf, welche jeweils zwei identische Befehle umfassen. Programmteile, welche für eine Verarbeitung in der oben anhand der in Fig. 3 erläuterten Hochleistungsbetriebsart vorgesehen sind, weisen Befehlspaare auf, welche zwei gleichzeitig von dem ersten Rechenwerk 2 bzw. dem zweiten Rechenwerk 4 zu verarbeitende Befehle umfassen. Programmteile, welche für eine Verarbeitung in der oben anhand der Fig. 4 erläuterten Leistungssparbetriebsart vorgesehen sind, weisen Befehlspaare auf, welche für eines der Rechenwerke 2 und 4 einen auszuführenden Befehl und für das jeweils andere Rechenwerk einen nicht zu verarbeitenden Befehl oder einen Deaktivierungs- bzw. Abschaltbefehl aufweisen.

Bei Programmteilen, welche in der Hochsicherheitsbetriebsart ablaufen, verarbeiten somit das erste Rechenwerk 2 und das zweite Rechenwerk 4 gesteuert durch identische Befehle synchron komplementäre Daten von der gleichen Datenquelle. Bei Programmteilen, welche in der Hochleistungsbetriebsart ablaufen, verarbeiten das erste Rechenwerk 2 und das zweite Rechenwerk 4 gesteuert durch im allgemeinen voneinander verschiedene Befehle verschiedene Daten von ein und derselben oder verschiedenen Datenquellen. Bei Programmteilen, welche für eine Bearbeitung in der Leistungssparbetriebsart vorgesehen sind, bearbeitet eines der beiden Rechenwerke gesteuert durch Befehle Daten und das andere Rechenwerk ist stillgelegt bzw. abgeschaltet. Im Fall von drei oder mehr Rechenwerken ist eine Kombination der Betriebsmodi möglich.

Die oben dargestellten Ausführungsbeispiele sind ohne weiteres auf Prozessoren mit mehr als zwei Rechenwerken, vorzugsweise mit einer geraden Anzahl von paarweise baugleichen Rechenwerken erweiterbar. In diesem Fall können alle Paare von Rechenwerken in derselben Betriebsart oder aber in verschiedenen Betriebsarten arbeiten. In der Leistungssparbetriebsart können alle Rechenwerke bis auf eines abgeschaltet sein. Im Fall von drei oder mehr Rechenwerken ist eine Kombination der Betriebsarten möglich.

Die vorliegende Erfindung eignet sich für alle Prozessoren, welche für kryptographische Anwendungen oder Sicherheitsanwendungen verwendet werden können und vor Seitenkanalangriffen geschützt werden sollen, beispielsweise für Prozessoren in Chipkarten.

### Bezugszeichenliste

- 2: erstes Rechenwerk
- 4: zweites Rechenwerk
- 6: Steuereinrichtung
- 8: Invertiereinrichtung
- 12: Steuerleitung
- 14: Steuerleitung
- 16: Befehlseingang
- 18: Befehlsleitung
- 20: Dateneingang
- 22: Datenleitung
- 24: Befehlseingang
- 26: Befehlsleitung
- 28: Dateneingang
- 30: Datenleitung
- 32: Ausgang der Invertiereinrichtung
- 34: Eingang der Invertiereinrichtung
- 36: Datenleitung
- 38: Steuerleitung

## Patentansprüche

1. Prozessor mit folgenden Merkmalen:
einem ersten Rechenwerk (2) mit einem Dateneingang (20) und einem Befehlseingang (16);
einem zweiten Rechenwerk (4) mit einem Dateneingang (28) und einem Befehlseingang (24);
einer steuerbaren Komplementierungseinrichtung (8), die ausgangsseitig mit dem Dateneingang (28) des zweiten Rechenwerks verbunden ist, zum Empfangen von Daten und zum Ausgeben der empfangenen Daten in einem ausgeschalteten Zustand und zum Ausgeben eines Komplements der empfangenen Daten in einem eingeschalteten Zustand; und
einer Steuereinrichtung (6) zum Ansteuern der beiden Rechenwerke (2) und (4) derart, daß diese wahlweise in einer komplementäre Daten verarbeitenden Hochsicherheitsbetriebsart oder in einer unabhängige Daten verarbeitenden Parallelbetriebsart arbeiten,
wobei die Steuereinrichtung ausgebildet ist, um
in der Hochsicherheitsbetriebsart die Komplementierungseinrichtung (8) in den eingeschalteten Zustand zu bringen und die gleichen Daten dem Dateneingang des ersten Rechenwerks und der Komplementierungseinrichtung, und die gleichen Befehle dem Befehlseingang des ersten Rechenwerks und dem Befehlseingang des zweiten Rechenwerks so zuzuführen, daß das erste und das zweite Rechenwerk synchron komplementäre Daten verarbeiten, und
in der Parallelbetriebsart die Komplementierungseinrichtung in den ausgeschalteten Zustand zu bringen und erste Daten dem Dateneingang des ersten Rechenwerks und zweite Daten, die von den ersten Daten unabhängig sind, dem Dateneingang des zweiten Rechenwerks zuzuführen, und
wobei die Steuereinrichtung ferner ausgebildet ist, um für sicherheitsrelevante Programmteile oder Programme die Hochsicherheitsbetriebsart einzustellen, und um für vergleichsweise weniger sicherheitsrelevante Programme und Programmteile die Parallelbetriebsart einzustellen.

2. Prozessor mit folgenden Merkmalen:
einem ersten Rechenwerk (2) mit einem Dateneingang (20) und einem Befehlseingang (16);
einem zweiten Rechenwerk (4) mit einem Dateneingang (28) und einem Befehlseingang (24);
einer steuerbaren Komplementierungseinrichtung (8), die ausgangsseitig mit dem Dateneingang (28) des zweiten Rechenwerks verbunden ist, zum Empfangen von Daten und zum Ausgeben der empfangenen Daten in einem ausgeschalteten Zustand und zum Ausgeben eines Komplements der empfangenen Daten in einem eingeschalteten Zustand; und
einer Steuereinrichtung (6) zum Ansteuern der beiden Rechenwerke (2) und (4) derart, daß diese wahlweise in einer komplementäre Daten verarbeitenden Hochsicherheitsbetriebsart arbeiten oder sich in einer Leistungssparbetriebsart befinden, in der eines der Rechenwerke (2, 4) abgeschaltet ist,
wobei die Steuereinrichtung ausgebildet ist, um
in der Hochsicherheitsbetriebsart die Komplementierungseinrichtung (8) in den eingeschalteten Zustand zu bringen und die gleichen Daten dem Dateneingang des ersten Rechenwerks und der Komplementierungseinrichtung, und die gleichen Befehle dem Befehlseingang des ersten Rechenwerks und dem Befehlseingang des zweiten Rechenwerks so zuzuführen, daß das erste und das zweite Rechenwerk synchron komplementäre Daten verarbeiten, und
in der Leistungssparbetriebsart das zweite Rechenwerk abzuschalten, und
wobei die Steuereinrichtung ferner ausgebildet ist, um für sicherheitsrelevante Programmteile oder Programme die Hochsicherheitsbetriebsart einzustellen, und um für weniger sicherheitsrelevante Programmteile oder Programme die Leistungssparbetriebsart einzustellen.

3. Prozessor mit folgenden Merkmalen:
einem ersten Rechenwerk (2) mit einem Dateneingang (20) und einem Befehlseingang (16);
einem zweiten Rechenwerk (4) mit einem Dateneingang (28) und einem Befehlseingang (24);
einer steuerbaren Komplementierungseinrichtung (8), die ausgangsseitig mit dem Dateneingang (28) des zweiten Rechenwerks verbunden ist, zum Empfangen von Daten und zum Ausgeben der empfangenen Daten in einem ausgeschalteten Zustand und zum Ausgeben eines Komplements der empfangenen Daten in einem eingeschalteten Zustand; und
einer Steuereinrichtung (6) zum Ansteuern der beiden Rechenwerke (2) und (4) derart, daß diese wahlweise in einer komplementäre Daten verarbeitenden Hochsicherheitsbetriebsart oder in einer gleiche Daten verarbeitenden Sicherheitsbetriebsart arbeiten,
wobei die Steuereinrichtung ausgebildet ist, um
in der Hochsicherheitsbetriebsart die Komplementierungseinrichtung (8) in den eingeschalteten Zustand zu bringen und die gleichen Daten dem Dateneingang des ersten Rechenwerks und der Komplementierungseinrichtung, und die gleichen Befehle dem Befehlseingang des ersten Rechenwerks und dem Befehlseingang des zweiten Rechenwerks so zuzuführen, daß das erste und das zweite Rechenwerk synchron komplementäre Daten verarbeiten, und
in der Sicherheitsbetriebsart die Komplementierungseinrichtung in den ausgeschalteten Zustand zu bringen und die gleichen Daten dem Dateneingang des ersten Rechenwerks und dem Dateneingang des zweiten Rechenwerks zuzuführen und um die gleichen Befehle dem Befehlseingang des ersten Rechenwerks und dem Befehlseingang des zweiten Rechenwerks zuzuführen, und
wobei ferner eine Vergleichseinrichtung vorgesehen ist, die ausgebildet ist, um eine Ausgabe des ersten Rechenwerks und eine Ausgabe des zweiten Rechenwerks auf Übereinstimmung zu prüfen und abhängig davon eine voreingestellte Reaktion auszulösen.

4. Prozessor gemäß einem der Ansprüche 1 bis 3, ferner mit folgenden Merkmalen:
einem dritten Rechenwerk; und
einem vierten Rechenwerk;
wobei das dritte Rechenwerk und das vierte Rechenwerk durch die Steuereinrichtung (6) derart ansteuerbar sind, daß sie wahlweise in einer komplementäre Daten verarbeitenden Hochsicherheitsbetriebsart oder in einer unabhängige Daten verarbeitenden Parallelbetriebsart arbeiten.

5. Prozessor gemäß einem der Ansprüche 1 bis 3, ferner mit folgenden Merkmalen:
einem dritten Rechenwerk; und
einem vierten Rechenwerk;
wobei das dritte Rechenwerk und das vierte Rechenwerk durch die Steuereinrichtung (6) derart ansteuerbar sind, daß sie wahlweise in einer komplementäre Daten verarbeitenden Hochsicherheitsbetriebsart arbeiten oder sich in einer Leistungssparbetriebsart befinden, in der das dritte und/oder das vierte Rechenwerk abgeschaltet ist.

6. Prozessor gemäß einem der Ansprüche 1 bis 3, ferner mit folgenden Merkmalen:
einem dritten Rechenwerk; und
einem vierten Rechenwerk;
wobei das dritte Rechenwerk und das vierte Rechenwerk durch die Steuereinrichtung (6) derart ansteuerbar sind, daß sie wahlweise in einer komplementäre Daten verarbeitenden Hochsicherheitsbetriebsart oder in einer gleiche Daten verarbeitenden Sicherheitsbetriebsart arbeiten.

7. Prozessor gemäß einem der Ansprüche 1 bis 6, bei dem das erste Rechenwerk (2) und das zweite Rechenwerk (4) räumlich benachbart oder ineinander verwoben angeordnet sind.

8. Prozessor gemäß einem der Ansprüche 1 bis 7, bei dem der Prozessor ein Kryptographie- oder Sicherheitsprozessor ist.

9. Prozessor nach einem der vorhergehenden Ansprüche, bei dem die Steuereinrichtung ausgebildet ist, um zwischen verschiedenen Betriebsarten dynamisch während eines Betriebs des Prozessors zu schalten.

10. Chipkarte mit einem Prozessor gemäß einem der Ansprüche 1 bis 8.

## Claims

1. Processor, comprising:
a first calculating unit (2) having a data input (20) and an instruction input (16);
a second calculating unit (4) having a data input (28) and an instruction input (24); and
a controllable complementation means (8), which is connected to the data input (28) of the second calculating unit on the output side, for receiving data and for outputting the received data in a switched-off state and for outputting the complement of the received data in a switched-on state; and
a control means (6) for controlling the two calculating units (2) and (4) such that they operate selectively in a high security mode of operation processing complementary data or in a parallel mode of operation processing independent data,
wherein the control means is formed to
put the complementation means (8) in the high-security mode of operation to the switched-on state and to supply the same data to the data input of the first calculating unit and the complementation means, and the same instructions to the instruction input of the first calculating unit and the instruction input of the second calculating unit, such that the first and the second calculating unit process complementary data synchronously, and put the complementation means in the parallel mode of operation to the switched-off state and supply first data to the data input of the first calculating unit and second data being independent of the first data to the data input of the second calculating unit, and
wherein the control means is further formed to set the high-security mode of operation for security-relevant program parts or programs, and to set the parallel mode of operation for comparatively less security-relevant program parts or programs.

2. Processor, comprising:
a first calculating unit (2) having a data input (20) and an instruction input (16);
a second calculating unit (4) having a data input (28) and an instruction input (24); and
a controllable complementation means (8), which is connected to the data input (28) of the second calculating unit on the,output side, for receiving data and for outputting the received data in a switched-off state and for outputting a complement of the received data in a switched-on state; and
a control means (6) for controlling the two calculating units (2) and (4) such that they operate selectively in a high-security mode of operation processing complementary data or are in a power-saving mode of operation, wherein one of the calculating units (2, 4) is switched off,
wherein the control means is formed to
put the complementation means (8) in the high-security mode of operation to the switched-on state and to supply the same data to the data input of the first calculating unit and the complementation means, and the same instructions to the instruction input of the first calculating unit and the instruction input of the second calculating unit, such that the first and the second calculating unit process complementary data synchronously, and
put the second calculating unit in the power-saving mode of operation in the switched-off state,
wherein the control means is further formed to set the high security mode of operation for security-relevant program parts or programs, and to set the power-saving mode of operation for less security-relevant program parts or programs.

3. Processor, comprising:
a first calculating unit (2) having a data input (20) and an instruction input (16);
a second calculating unit (4) having a data input (28) and an instruction input (24); and
a controllable complementation means (8), which is connected to the data input (28) of the second calculating unit on the output side, for receiving data and for outputting the received data in a switched-off state and for outputting a complement of the received data in a switched-on state; and
a control means (6) for controlling the two calculating units (2) and (4) such that they operate selectively in a high-security mode of operation processing complementary data or in security mode of operation processing the same data,
wherein the control means is formed to
put the complementation means (8) in the high-security mode of operation to the switched-on state and to supply the same data to the data input of the first calculating unit and the complementation means, and the same instructions to the instruction input of the first calculating unit and the instruction input of the second calculating unit, such that the first and the second calculating unit process complementary data synchronously, and
put the complementation means in the security mode of operation in a switched-off state and supply the same data to the data input of the first calculating unit and to the data input of the second calculating unit, and to supply the same instructions to the instruction input of the first calculating unit and to the instruction input of the second calculating unit, and
wherein further a compare means is provided, which is formed to check an output of the first calculating unit and an output of the second calculating unit for consistency and to trigger a preset reaction in dependency thereon.

4. Processor according to one of claims 1 to 3, further comprising:
a third calculating unit; and
a fourth calculating unit;
wherein the third calculating unit and the fourth calculating unit can be controlled by the control means (6) such that they operate selectively in a high-security mode of operation processing complementary data or in a parallel mode of operation processing independent data.

5. Processor according to one of claims 1 to 3, further comprising:
a third calculating unit; and
a fourth calculating unit;
wherein the third calculating unit and the fourth calculating unit can be controlled by the control means (6) such that they operate selectively in a high-security mode of operation processing complementary data or are in a power-saving mode of operation, wherein the third and/or the fourth calculating unit is switched off.

6. Processor according to one of claims 1 to 3, further comprising:
a third calculating unit; and
a fourth calculating unit;
wherein the third calculating unit and the fourth calculating unit can be controlled by the control means (6) such that they operate selectively in a high security mode of operation processing complementary data or in security mode of operation processing the same data.

7. Processor according to one of claims 1 to 6, wherein the first calculating unit (2) and the second calculating unit (4) are disposed spatially adjacent or intertwined with each other.

8. Processor according to one of claims 1 to 7, wherein the processor is a cryptography or security processor.

9. Processor according to one of the preceding claims, wherein the control means is formed to switch dynamically between different modes of operation during operation of the processor.

10. Chip card with a processor according to one of claims 1 to 8.

## Revendications

1. Processeur ayant les caractéristiques suivantes :
une première unité (2) de calcul, ayant une entrée (20) de données et une entrée (16) d'instructions ;
une deuxième unité (4) de calcul, ayant une entrée (28) de données et une entrée (24) d'instructions ;
un dispositif (8) de formation d'un complément, qui peut être commandé et qui est relié côté sortie à l'entrée (28) de données de la deuxième unité de calcul pour la réception de données et pour l'émission des données reçues dans un état déconnecté et pour l'émission d'un complément des données reçues dans un état connecté ; et
un dispositif (6) de commande pour commander les deux unités (2) et (4) de calcul de façon à ce que celles-ci travaillent au choix dans un type de fonctionnement de haute sécurité traitant des données complémentaires ou dans un type de fonctionnement parallèle traitant des données indépendantes,
le dispositif de commande étant constitué pour
mettre dans le type de fonctionnement de haute sécurité le dispositif (8) de formation d'un complément à l'état connecté et envoyer les mêmes données à l'entrée de données de la première unité de calcul et au dispositif de formation d'un complément et envoyer les mêmes instructions à l'entrée d'instructions de la première unité de calcul et à l'entrée d'instructions de la deuxième unité de calcul de façon à ce que la première et la deuxième unités de calcul traitent des données complémentaires en synchronisme ; et
dans le type de fonctionnement en parallèle, mettre le dispositif de formation d'un complément à l'état déconnecté et envoyer des premières données à l'entrée de données de la première unité de calcul et des deuxièmes données, qui sont indépendantes des premières données, à l'entrée de données de la deuxième unité de calcul ; et
dans lequel le dispositif de commande est constitué, en outre, pour établir pour des parties de programme ou des programmes pertinents du point de vue de la sécurité le type de fonctionnement de haute sécurité et pour établir le type de fonctionnement en parallèle pour des programmes et des parties de programme relativement moins pertinents du point de vue de la sécurité.

2. Processeur ayant les caractéristiques suivantes :
une première unité (2) de calcul, ayant une entrée (20) de données et une entrée (16) d'instructions ;
une deuxième unité (4) de calcul, ayant une entrée (28) de données et une entrée (24) d'instructions ;
un dispositif (8) de formation d'un complément, qui peut être commandé et qui est relié côté sortie à l'entrée (28) de données de la deuxième unité de calcul pour la réception de données et pour l'émission des données reçues dans un état déconnecté et pour l'émission d'un complément des données reçues dans un état connecté ; et
un dispositif (6) de commande pour commander les deux unités (2) et (4) de calcul de façon à ce qu'elles fonctionnent au choix dans un type de fonctionnement de haute sécurité traitant des données complémentaires ou se trouvent dans un type de fonctionnement d'économie de puissance dans lequel l'une des unités (2, 4) de calcul est déconnectée,
le dispositif de commande étant constitué pour
mettre dans le type de fonctionnement de haute sécurité le dispositif (8) de formation d'un complément à l'état connecté et envoyer les mêmes données à l'entrée de données de la première unité de calcul et au dispositif de formation d'un complément et envoyer les mêmes instructions à l'entrée d'instructions de la première unité de calcul et à l'entrée d'instructions de la deuxième unité de calcul de façon à ce que la première et la deuxième unités de calcul traitent des données complémentaires en synchronisme ; et
déconnecter dans le type de fonctionnement d'économie de puissance la deuxième unité de calcul, et
dans lequel le dispositif de commande est constitué, en outre, pour établir le type de fonctionnement de haute sécurité pour des parties de programme ou des programmes pertinents du point de vue de la sécurité et pour établir le type de fonctionnement d'économie de puissance pour des programmes et des parties de programme moins pertinents du point de vue de la sécurité.

3. Processeur ayant les caractéristiques suivantes :
une première unité (2) de calcul, ayant une entrée (20) de données et une entrée (16) d'instructions ;
une deuxième unité (4) de calcul, ayant une entrée (28) de données et une entrée (24) d'instructions ;
un dispositif (8) de formation d'un complément, qui peut être commandé et qui est relié côté sortie à l'entrée (28) de données de la deuxième unité de calcul pour la réception de données et pour l'émission des données reçues dans un état déconnecté et pour l'émission d'un complément des données reçues dans un état connecté ; et
un dispositif (6) de commande pour commander les deux unités (2) et (4) de calcul de façon que celles-ci fonctionnent au choix dans un type de fonctionnement de haute sécurité traitant des données complémentaires ou dans un type de fonctionnement de sécurité traitant des mêmes données,
le dispositif de commande étant constitué pour
mettre dans le type de fonctionnement de haute sécurité le dispositif (8) de formation d'un complément à l'état connecté et envoyer les mêmes données à l'entrée de données de la première unité de calcul et au dispositif de formation d'un complément et envoyer les mêmes instructions à l'entrée d'instructions de la première unité de calcul et à l'entrée d'instructions de la deuxième unité de calcul de façon à ce que la première et la deuxième unités de calcul traitent des données complémentaires en synchronisme ; et
dans le type de fonctionnement de sécurité, mettre le dispositif de formation d'un complément à l'état déconnecté et envoyer les mêmes données à l'entrée de données de la première unité de calcul et à l'entrée de données de la deuxième unité de calcul et envoyer les mêmes instructions à l'entrée d'instructions de la première unité de calcul et à l'entrée d'instructions de la deuxième unité de calcul ; et
dans lequel il est prévu, en outre, un dispositif de comparaison qui est constitué pour contrôler la coïncidence d'une sortie de la première unité de calcul et d'une sortie de la deuxième unité de calcul et pour déclencher en fonction de cela une réaction établie à l'avance.

4. Processeur suivant l'une des revendications 1 à 3, comprenant, en outre, les caractéristiques suivantes :
une troisième unité de calcul ; et
une quatrième unité de calcul ;
la troisième unité de calcul et la quatrième unité de calcul pouvant être commandées par le dispositif (6) de commande de façon à ce qu'elles fonctionnent au choix dans un type de fonctionnement de haute sécurité traitant des données complémentaires ou dans un type de fonctionnement en parallèle traitant des données indépendantes.

5. Processeur suivant l'une des revendications 1 à 3, comprenant, en outre, les caractéristiques suivantes :
une troisième unité de calcul ; et
une quatrième unité de calcul ;
dans lequel la troisième unité de calcul et la quatrième unité de calcul peuvent être commandées par le dispositif (6) de commande de manière à fonctionner au choix dans un type de fonctionnement de haute sécurité traitant des données complémentaires ou se trouver dans un type de fonctionnement d'économie de puissance dans lequel la troisième et/ou la quatrième unité de calcul est déconnectée.

6. Processeur suivant l'une des revendications 1 à 3, comprenant, en outre, les caractéristiques suivantes :
une troisième unité de calcul ; et
une quatrième unité de calcul ;
dans lequel la troisième unité de calcul et la quatrième unité de calcul peuvent être commandées par le dispositif (6) de commande de façon à fonctionner au choix dans un type de fonctionnement de haute sécurité traitant des données complémentaires ou dans un type de fonctionnement de sécurité traitant des mêmes données.

7. Processeur suivant l'une des revendications 1 à 6, dans lequel la première unité (2) de calcul et la deuxième unité (4) de calcul sont disposées en étant voisines dans l'espace ou en étant entrelacées.

8. Processeur suivant l'une des revendications 1 à 7, dans lequel le processeur est un processeur de cryptographie ou un processeur de sécurité.

9. Processeur suivant l'une des revendications précédentes, dans lequel le dispositif de commande est constitué pour commuter en des types de fonctionnement différents de façon dynamique pendant un fonctionnement du processeur.

10. Carte à puce ayant un processeur suivant l'une des revendications 1 à 8.
